# EUROPEAN PATENT SPECIFICATION

(11) **EP 2 933 234 B1**
(45) Date of publication and mention of the grant of the patent: **04.01.2017**
(21) Application number: 13862448.1
(22) Date of filing: 22.11.2013
(51) Int. Cl.: C02F 1/64, C02F 1/74, C22B 23/00

(54) **HEAVY-METAL REMOVAL METHOD**
VERFAHREN ZUR ENTFERNUNG VON SCHWERMETALL
PROCÉDÉ DE RETRAIT DE MÉTAUX LOURDS

(30) Priority: 11.12.2012 JP 2012270722
(43) Date of publication of application: 21.10.2015
(73) Proprietor: Sumitomo Metal Mining Co., Ltd., Tokyo 105-8716 (JP)
(72) Inventor: NAKAI, Takayuki, Tokyo 105-8716 (JP); MATSUBARA, Satoshi, Tokyo 105-8716 (JP); NAKAI, Osamu, Tokyo 105-8716 (JP); KYODA, Yoji, Tokyo 105-8716 (JP)
(74) Representative: Müller-Boré & Partner Patentanwälte PartG mbB
(86) International application number: PCT/JP2013/081472
(87) International publication number: WO 2014/091904

(56) References cited:
- WO-A2-2007/130344
- JP-A- H03 249 930
- JP-A- H09 248 578
- JP-A- H09 248 578
- JP-A- H09 314 169
- JP-A- S58 186 425
- JP-A- S62 125 834
- JP-A- 2000 070 985
- JP-A- 2002 282 664
- JP-A- 2004 167 386
- JP-A- 2010 031 302
- JP-A- 2010 095 788
- JP-A- 2010 207 674
- JP-A- 2010 207 674
- JP-A- 2012 240 012
- US-A- 4 207 275

## Description

### Technical Field

The present invention relates to a heavy-metal removal method and a heavy-metal removal device in a final neutralization step of a nickel oxide ore plant.

### Background Art

Many kinds of heavy metals are contained in a nickel oxide ore, the nickel oxide ore is dissolved by using sulfuric acid under high temperature and pressure conditions, and then a chemical treatment is performed to remove impurities, subsequently, a required metal such as nickel is recovered.

In order to discharge a solution after nickel recovery, the heavy metals that have left in the solution are required to be removed in some way. As a method for removing a heavy metal from industrial wastewater, there are a coagulation sedimentation method, an ion exchange method, an adsorption method using an absorbent such as activated carbon, an electrical adsorption method, and a magnetic adsorption method, however, a coagulation sedimentation method using a neutralizing agent is used in many factories as a general method.

Specifically, a method in which pH is increased by the addition of a neutralizing agent, a heavy metal is solidified as a hydroxide, then the solid and the liquid are separated by an operation of a filtration treatment and the like, the liquid is discharged outside the factory, and the solid is treated in a dumping ground is used. Further, as the neutralizing agent, an inexpensive calcium-based neutralizing agent such as lime stone and slaked lime is frequently used.

In general, it has been known that a heavy metal forms a hydroxide by the increase of the pH, and can be removed from a solution, however, a heavy metal such as iron and manganese forms a more stable hydroxide by oxidation. As an oxidation method of a heavy metal, aeration is an extremely useful method in view of equipment cost and operation cost.

JPH09248578 discloses a method for removing iron by treating the water in neutralizing tanks, while it is aerated by aerators to oxidize ferrous ions to ferric, it is neutralized by distributively injecting magnesium hydroxide from distributive injectors so that its pH may be kept constant by a pH meter, wherein a sludge is formed and subsequently separated.

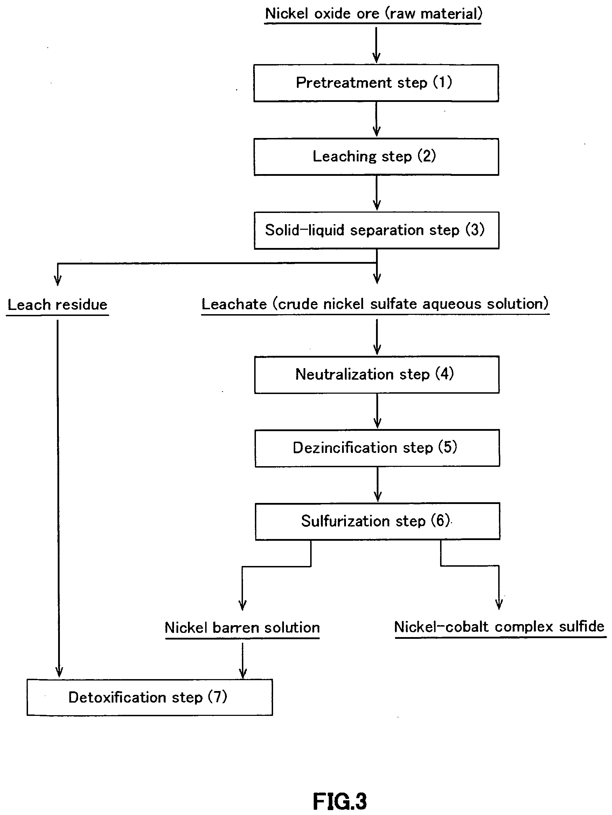

Herein, in a high pressure acid leaching (HPAL) method to obtain a nickel-cobalt mixed sulfide, as shown in Fig. 3, a pretreatment step (1), a leaching step (2), a solid-liquid separation step (3), a neutralization step (4), a dezincification step (5), a sulfurization step (6), and a detoxification step (7) are included (for example, see Patent Document 1).

In the pretreatment step (1), a nickel oxide ore is ground and classified to obtain a slurry.

In a leaching step (2), sulfuric acid is added into the slurry obtained in the pretreatment step (1), the resultant mixture is stirred at a temperature of 220 to 280°C, and high temperature pressure acid leaching is performed to obtain a leach slurry.

In a solid-liquid separation step (3), a leach slurry obtained in the leaching step (2) is subjected to solid-liquid separation to obtain a leachate containing nickel and cobalt (hereinafter, referred to as "crude nickel sulfate aqueous solution"), and leach residues.

In a neutralization step (4), a crude nickel sulfate aqueous solution obtained in the solid-liquid separation step (3) is neutralized.

In a dezincification step (5), hydrogen sulfide gas is added into the crude nickel sulfate aqueous solution neutralized in the neutralization step (4), and zinc is precipitated and removed as a zinc sulfide.

In a sulfurization step (6), hydrogen sulfide gas is added into the dezincification final solution obtained in the dezincification step (5), and a nickel-cobalt complex sulfide and a nickel barren liquor are obtained. In a detoxification step (7), a leach residue generated in the solid-liquid separation step (3) and a nickel barren liquor generated in the sulfurization step (6) are detoxified.

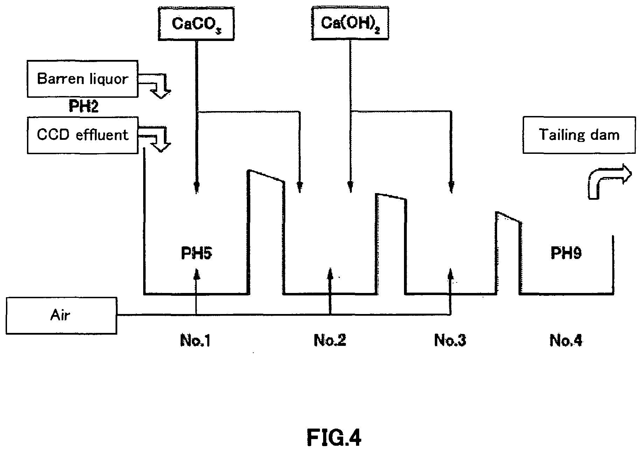

By the above-described high temperature pressure leaching method (HPAL), for example, a leach slurry after the leaching of nickel from a nickel laterite ore, and an effluent (barren liquor) obtained after the recovery of Ni and Co is discarded to a dam, however, the slurry and the effluent have low pH as they are, therefore, are detoxified in the above-described detoxification step (7). Specifically, in the detoxification step (7), as shown in Fig. 4, a barren liquor that is a process liquid discharged from a sulfurization step (6) is subjected to a neutralization treatment with lime stone and slaked lime as a neutralizing agent by using a final neutralization treatment equipment in which stirring tanks are connected in series in four stages, and is detoxified and discarded.

At this time, in the neutralization treatment equipment, in order to oxidize a heavy metal ion contained in the process liquid (slurry), gas is discharged into the treatment tank so as to oxidize the heavy metal ion. Further, the slurry to be charged has around pH 2, and the slurry is subjected to neutralization by using CaCO₃ in the initial stage in which the pH is low, and Ca(OH)₂ in the latter half stage, and the pH is finally increased to around 9. In addition, in order to precipitate Mg, Mn, and other trace metals (Ni, Co, Fe, Al, and Cr), gas discharge (aeration) is performed to increase the valency number.

In the detoxification treatment (final neutralization treatment), the required amount of the neutralizing agent varies depending on the flow rate and acidity of the process liquid to be subjected to the treatment, or on the concentration of the contained heavy metals, however, also in any process, it is desired to reduce the amount of a neutralizing agent to be used from the viewpoint of cost reduction.

### Prior Art Documents

### Patent Documents

Patent Document 1: Japanese Patent Application Laid-Open (JP-A) No. 2011-225908
Patent Document 2: JP-A No. H08-071585
Patent Document 3: JP-ANo. H10-258222
Patent Document 4: JP-A No. H09-248578

### Summary of the Invention

### Problems to be Solved by the Invention

The present invention has been made in consideration of these circumstances, and an object of the present invention is to provide a heavy-metal removal method capable of reducing the amount of a neutralizing agent to be used.

Another object of the present invention and a specific advantage obtained by the present invention become more apparent from the explanation of an embodiment described below.

### Means to Solve the Problems

In the present invention, an annular aeration tube having a large number of air outlets is arranged to a bottom part of a vertical-type cylindrical reaction vessel, aeration is performed by using a simple aeration device for blowing gas for oxidation from a large number of air outlets of the annular aeration tube, while stirring an aqueous solution containing a heavy metal ion in the reaction vessel, and a neutralization treatment in which an aqueous solution containing a heavy metal ion is neutralized with a neutralizing agent is performed to solidify and remove the heavy metal as a hydroxide.

That is, the present invention is a heavy-metal removal method, and characterized in that in a neutralization tank provided with a vertical-type cylindrical reaction vessel, stirring blades arranged in the reaction vessel, and an annular aeration tube having a large number of air outlets and being arranged to the bottom part of the reaction vessel, aeration is performed by introducing gas for oxidation from a large number of air outlets of the aeration tube while stirring an aqueous solution containing at least one kind of ion of a divalent ferrous ion and a divalent manganese ion as a heavy metal element by rotation of the stirring blades, and into the aqueous solution, a neutralizing agent is added, the resultant mixture is subjected to a neutralization treatment to remove the heavy metal as a hydroxide.

In the present invention, in a final neutralization step in a hydrometallurgy plant for a nickel oxide ore, a neutralization treatment is performed by the neutralization tank, and the heavy metal is solidified and removed as a hydroxide.

Further, in the present invention, the gas for oxidation is air.

In addition, in the present invention, the annular aeration tube has a diameter size of 60 to 85% of that of the reaction vessel.

Further, in the present invention, the air outlets are circular and have a diameter size of 18 to 22 mm.

In addition, in the present invention, the air outlets are arranged at each position in an angle range of 45 degree to both sides from directly under the annular aeration tube and at equal intervals.

### Advantageous Effects of the Invention

According to the present invention, an annular aeration tube having a large number of air outlets is arranged to bottom part of a vertical-type cylindrical reaction vessel, aeration is performed by using an aeration device for blowing gas for oxidation from the annular aeration tube to perform a neutralization treatment for an aqueous solution, while stirring an aqueous solution containing a heavy metal ion in the reaction vessel, as a result, the required amount of the neutralizing agent to be used for the neutralization of the heavy metals contained in the aqueous solution is reduced, and the heavy metals can efficiently be removed.

### Brief Description of the Drawings

Fig. 1 is an external perspective view illustrating constitution of a heavy-metal removal device to which the present invention is applied.
Fig. 2 is a process chart of a hydrometallurgy plant for a nickel oxide ore, in which a heavy-metal removal device is used.
Fig. 3 is a process chart of a nickel oxide ore plant by a high pressure acid leach method.
Fig. 4 is a diagram illustrating the constitution of final neutralization treatment equipment in a detoxification step of a nickel oxide ore plant.

### Description of the Embodiments

Hereinafter, a specific embodiment to which the present invention is applied will be described in detail with reference to the drawings.

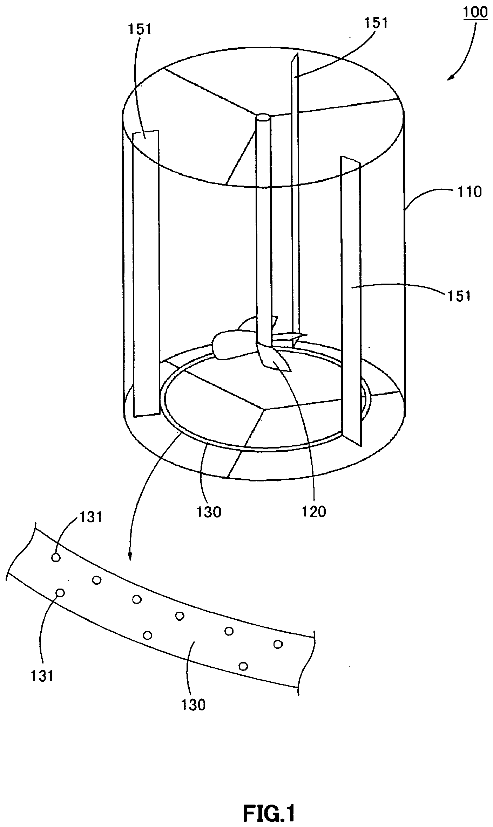

A heavy-metal removal method according to the present embodiment is, for example, performed by a heavy-metal removal device with the constitution as illustrated in Fig. 1.

The heavy-metal removal device 100 is an neutralization tank provided with a vertical-type cylindrical reaction vessel 110, stirring blades 120 arranged in the reaction vessel 110, and an annular aeration tube 130 having a large number of air outlets 131 and being arranged to bottom part of the reaction vessel 110. Further, in the vertical-type cylindrical reaction vessel 110, three plates of baffle plates 151 are arranged.

In a heavy-metal removal method according to the present embodiment, using the heavy-metal removal device 100, in a vertical-type cylindrical reaction vessel 110, aeration is performed by introducing gas for oxidation from a large number of air outlets 131 of the aeration tube 130 while stirring an aqueous solution containing at least one kind of ion of a divalent ferrous ion and a divalent manganese ion as a heavy metal element by rotation of the stirring blades 120, and into the aqueous solution, a neutralizing agent is added, the resultant mixture is subjected to a neutralization treatment to solidify and remove the heavy metal as a hydroxide.

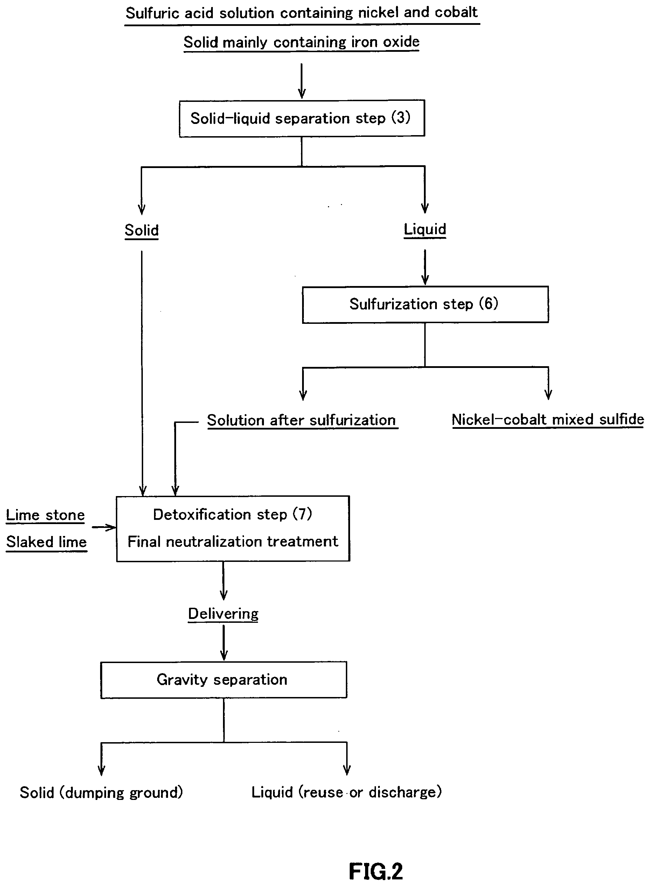

For example, in a hydrometallurgy plant for a nickel oxide ore, as described above, in a detoxification step, a heavy metal is solidified and removed as a hydroxide by a final neutralization treatment, and a leach residue generated in a solid-liquid separation step and a nickel barren liquor generated in a sulfurization step are detoxified and discarded. At this time, in the present embodiment, for example, as shown in the process chart of Fig. 2, a neutralization treatment using a heavy-metal removal device is performed in the final neutralization treatment step, the heavy metal is solidified and removed as a hydroxide.

Specifically, in the final neutralization step, a barren liquor that is a process liquid discharged in a sulfurization step is charged into a vertical-type cylindrical reaction vessel 110 of a heavy-metal removal device 100, and a neutralization treatment is performed.

In a barren liquor discharged in a hydrometallurgy plant for a nickel oxide ore, mainly a pure metal such as iron and manganese is contained. These heavy metals can be separated from the process liquid as precipitates (neutralized precipitates) of a hydroxide by the performing of a neutralization treatment in which pH of the barren liquor is adjusted.

Herein, in the final neutralization step, as the pH required for maintaining the concentration of a heavy metal in a solution to 1 mg/L or less, as shown in Fig. 1, the pH for the divalent ferrous ion is 9.0, the pH for trivalent iron is 2.7, the pH for divalent manganese ion is 10.0, and the pH for trivalent manganese ion is 3.6.

**[Table 1]**

| | pH Required for decreasing the concentration of heavy metal to 1 mg/L or less |
|---|---|
| Divalent ferrous ion | 9.0 |
| Trivalent ferrous ion | 2.7 |
| Divalent ferromanganese ion | 10.0 |
| Trivalent ferromanganese ion | 3.6 |

That is, as to the heavy metal ion in a solution, a trivalent heavy metal ion can be precipitated with a lower pH as compared with the pH used for a divalent heavy metal ion. The process liquid to be charged into the final neutralization step is originally a solution on acidic side, therefore, when the pH is adjusted to low pH, the amount of a neutralizing agent to be used can be reduced.

In a final neutralization step in a hydrometallurgy plant for a nickel oxide ore, conventionally, a reaction tank with stirring blades is used. The reaction tank generally has a vertical-type cylindrical shape, and in which it is common not to generate stirring unevenness. At this time, in the present embodiment, further, gas for oxidation is blown into the reaction tank and a barren liquor is aerated.

Specifically, in the present embodiment, in a final neutralization step of a hydrometallurgy plant for a nickel oxide ore, a heavy-metal removal device 100 in which an annular aeration tube130 having a large number of air outlets 131 and being arranged to a bottom part of the vertical-type cylindrical reaction vessel 110 is used. In addition, aeration by the blowing of gas for oxidation from outlets 131 of the aeration tube 130 is performed while stirring a process liquid containing a heavy metal ion in the reaction vessel 110, and the process liquid containing a heavy metal ion is subjected to a neutralization treatment. Heavy metals in the process liquid are solidified as hydroxides, and the solid and the liquid are subjected to gravity separation. The solid obtained by the gravity separation is discarded into a dumping ground, and on the other hand, the liquid is returned to the solid-liquid separation step and used as washing water, or discarded.

That is, the heavy-metal removal device 100 used in the heavy-metal removal method according to the above-described present embodiment includes a neutralization tank provided with a vertical-type cylindrical reaction vessel 110, stirring blades 120 arranged in the reaction vessel 110, and an annular aeration tube 130 having a large number of air outlets 131 and being arranged to bottom part of the reaction vessel 110. Further, in a vertical-type cylindrical reaction vessel 110, that is, in a neutralization tank, aeration is performed by introducing gas for oxidation from air outlets 131 of the aeration tube 130 while stirring a process liquid in a final neutralization step, that is, an aqueous solution containing at least one kind of ion of a divalent ferrous ion and a divalent manganese ion as a heavy metal element by rotation of the stirring blades 120, and the aqueous solution containing a heavy metal ion is subjected to a neutralization treatment in which neutralization is performed by a neutralizing agent.

As described above, aeration is performed via an annular aeration tube 130 having a large number of air outlets 131 and being arranged to bottom part in the reaction vessel 110, and bubbles to flow into the reaction vessel 110 are allowed to be split into small bubbles, and the total area of bubbles can be increased. In addition, an aqueous solution containing a heavy metal ion is uniformly stirred in the reaction vessel 110, as a result, the abundance of bubbles can be brought into contact with the aqueous solution, and a high aeration effect can be obtained. That is, the gas for oxidation fed into the reaction vessel 110 becomes in the state of being dispersed on the bottom of the neutralization tank from immediately after the feeding, therefore, the oxidation can efficiently be performed over the entire aqueous solution containing a heavy metal ion.

That is, a heavy metal ion in an aqueous solution can efficiently be oxidized from divalent to trivalent. Further, as described above, since the heavy metal ion can be oxidized to a trivalent heavy metal ion, a precipitate of a hydroxide can be formed with a low pH, therefore, the required amount of a neutralizing agent to be used for a neutralization treatment can effectively be reduced.

Herein, the gas for oxidation is not particularly limited as long as being gas that maintains the bubbles in a liquid, that is, being gas that is not easily dissolved into a liquid, however, air is preferably used in view of cost.

Herein, in order to stabilize the flow in a reaction vessel 110 of a heavy-metal removal device 100, the air is required to be gone up along the vessel wall. In this respect, the aeration tube 130 in the heavy-metal removal device 100 is formed in an annular shape having a diameter size of 60 to 85% of that of the reaction vessel 110.

The diameter of the aeration tube 130 for the diameter of the reaction vessel 110 is changed, and the aeration effect is observed. As a result, when an aeration tube 130 is formed in an annular shape having a diameter size of 60 to 85% of that of the reaction vessel 110, the degree of dispersion of the gas is increased, and a high aeration effect could be obtained.

Further, in a heavy-metal removal device 100, the shape of a large number of air outlets 131 formed to an aeration tube 130 is circular and has a diameter size of 18 to 22 mm.

When the air outlets 131 are formed to be circular, strength reduction of the aeration tube 130 can be the least as compared with the case where the air outlets are formed in another shape having the same opening area. Further, when the diameter is 18 mm to 22 mm, an effect of oxidizing a heavy metal ion can be enhanced, therefore, this is preferred.

It is noted that it is considered that there is a bubble size optimal for the density and flow characteristics of the process liquid to be subjected to a neutralization treatment, and when the diameter of an air outlet is smaller than 18 mm, the rising speed of bubbles in a liquid is extremely slow, and it takes a long time. On the other hand, when the diameter of an air outlet is larger than 22 mm, the rising speed is extremely fast, and there may be a case where air is not sufficiently brought into contact with the aqueous solution.

In addition, as to the air outlets 131, one outlet is arranged directly under the annular aeration tube 130, and each of other outlets is arranged at each of both positions at an angle of 45° to both sides from the one outlet arranged directly under the annular aeration tube, the total three outlets are made to be a set. The set is arranged to the annular aeration tube 130 at equal intervals.

### Examples

Hereinafter, Examples of the present invention will be described, however, the present invention is not limited to the following Examples.

### (Example 1)

In the present Examples, in a final neutralization step in a hydrometallurgy plant for a nickel oxide ore, a barren liquor that is a process liquid discharged from a sulfurization step was subjected to a detoxification treatment in which a heavy metal ion in the solution is removed by using the above-described heavy-metal removal device 100.

In the heavy-metal removal device 100, an aeration tube 130 was arranged to the bottom part at a position where the distance from the center of a cylindrical reaction vessel 110 is 72% of the diameter of the reaction vessel 110, and 189 outlets of air outlets 131 having a diameter of 20 mm was arranged to the bottom surface part of the aeration tube 130. At this time, as to a case where aeration was performed using the aeration tube 130 and a case where aeration was performed from a conventional simple blowing tube (three blowing tubes), the results of the hold-up amount of air were compared with each other. The measurement results are shown in Table 2.

**[Table 2]**

| | Blowing amount of air (kg/hr) | Blowing ratio (%) |
|---|---|---|
| Blowing from short tube (three tubes) | 3519 | 100 |
| Blowing from aeration tube 130 | 2300 | 65.4 |

As shown in Table 2, in a case where aeration was performed using an aeration tube 130, it has been found that when the flow rate of air blowing is set to around 2300 kg/h, the same effect is obtained by around 65% of aeration as compared with a case where aeration was performed by a three conventional simple blowing tubes, and therefore blown gas can effectively be utilized.

### (Example 2)

Next, in a final neutralization step in a hydrometallurgy plant for a nickel oxide ore, a barren liquor that is a process liquid discharged from a sulfurization step was subjected to a neutralization treatment in which a neutralizing agent is added, by using the same heavy-metal removal device 100 as that used in Example 1, the used amount of the slaked lime required for the neutralization treatment was compared with that in a conventional final neutralization step. The measurement results are shown in Table 3.

**[Table 3]**

| | Outlet Mn concentration (mg/l) | Used amount of slaked lime (t/hr) |
|---|---|---|
| Neutralization by heavy-metal removal device 100 | <1 | 16.1 |
| Neutralization by conventional method | <1 | 16.4 |

As shown in Table 3, by the performing of a neutralization treatment while performing aeration using a aeration tube 130, the Mn concentration in an outlet of a reaction tank can be decreased to less than 1 mg/L, and further the used amount of slaked lime can also be decreased by as much as 0.3 t/hr as compared with the conventional method.

### Reference Symbols

100 heavy-metal removal device; 110 reaction vessel; 120 stirring blade; 130 aeration tube; 131 air outlet; 151 baffle plate

## Claims

1. A heavy-metal removal method, wherein
in a neutralization tank provided with a vertical-type cylindrical reaction vessel (110), stirring blades (120) arranged in the reaction vessel (110), and an annular aeration tube (130) having a large number of air outlets (131) and being arranged to a bottom part of the reaction vessel (110),
aeration is performed by introducing air as gas for oxidation from a large number of air outlets (131) of the aeration tube (130) while stirring an aqueous solution containing at least one kind of ion of a divalent ferrous ion and a divalent manganese ion as a heavy metal element by rotation of the stirring blades (120), and a neutralization treatment in which the aqueous solution containing the heavy metal ion is neutralized with a neutralizing agent is performed to solidify and remove the heavy metal as a hydroxide, wherein
the annular aeration tube (130) has a diameter size of 60 to 85% of that of the reaction vessel (110),
the air outlets (131) are circular and have a diameter size of 18 to 22 mm, and three air outlets (131) are made to be a set, wherein one outlet is arranged directly under the annular aeration tube (130) and each of the other outlets is arranged at each of both positions at an angle of 45° to both sides from the one outlet arranged directly under the annular aeration tube (130) and wherein the sets are arranged to the annular aeration tube (130) at equal intervals.

2. The heavy-metal removal method according to Claim 1, wherein
in a final neutralization step in a hydrometallurgy plant for a nickel oxide ore, a neutralization treatment is performed by the neutralization tank, and the heavy metal is removed as a hydroxide.

## Patentansprüche

1. Methode zur Entfernung von Schwermetallen, wobei
in einem Neutralisationstank, ausgestattet mit einem zylindrischen Vertikaltyp Reaktionsgefäß (110), Rührblättern (120) angeordnet im Reaktionsgefäß (110) und einem ringförmigen Belüftungsrohr (130) mit einer großen Anzahl an Luftauslässen (131) und angeordnet zu einem Unterteil des Reaktionsgefäßes (110),
die Belüftung durchgeführt wird, indem Luft als Gas zur Oxidation aus einer großen Anzahl Luftauslässe (131) des Belüftungsrohrs (130) eingeleitet wird, während des Rührens einer wässrigen Lösung, enthaltend mindestens eine Art von Ion von einem zweiwertigen eisenhaltigen Ion und einem zweiwertigen Manganion als ein Schwermetallelement, durch Rotation der Rührblätter (120) und eine Neutralisationsbehandlung, in der die wässrige Lösung, enthaltend das Schwermetallion, mit einem Neutralisationsmittel neutralisiert wird, durchgeführt wird, um das Schwermetall als Hydroxid zu verfestigen und zu entfernen, wobei
das ringförmige Belüftungsrohr (130) einen Durchmesser von 60 bis 85% des Reaktionsgefäßes (110) hat,
die Luftauslässe (131) kreisförmig sind und einen Durchmesser von 18 bis 22 mm aufweisen, und drei Luftauslässe (131) zu einem Set kombiniert werden, wobei ein Auslass direkt unter dem ringförmigen Belüftungsrohr (130) mangeordnet ist und jeder der anderen Auslässe an der jeweiligen von beiden Positionen in einem Winkel von 45° zu beiden Seiten von dem einen Auslass, angeordnet direkt unter dem ringförmigen Belüftungsrohr (130), angeordnet ist und wobei die Sets in gleichen Abständen zu dem ringförmigen Belüftungsrohr angeordnet sind.

2. Methode zur Entfernung von Schwermetallen nach Anspruch 1, wobei in einem finalen Neutralisationsschritt in einer Hydrometallurgieanlage für ein Nickeloxiderz, eine Neutralisationsbehandlung durch den Neutralisationstank durchgeführt wird, und das Schwermetall als Hydroxid entfernt wird.

## Revendications

1. Procédé d'enlèvement d'un métal lourd, dans lequel
dans un réservoir de neutralisation ayant un caisson de réacteur cylindrique de type vertical (110), des lames de mélange (120) disposées dans le caisson de réacteur (110), et un tube d'aération annulaire (130) ayant un nombre élevé de sorties d'air (131) et étant arrangé à une partie inférieure du caisson de réacteur (110),
l'aération étant réalisée en introduisant de l'air comme gaz d'oxydation à partir d'un nombre élevé de sorties d'air (131) du tube d'aération (130) tout en mélangeant une solution aqueuse comprenant au moins un type d'ion parmi un ion ferreux bivalent et un ion manganèse bivalent comme élément de métal lourd par rotation des lames de mélange (120), et un traitement de neutralisation dans lequel la solution aqueuse comprenant l'ion de métal lourd est neutralisé avec un agent de neutralisation est réalisé pour solidifier et enlever le métal lourd sous forme d'un hydroxyde, dans lequel
le tube d'aération annulaire (130) a une taille de diamètre de 60 à 85% de celle du caisson de réacteur (110),
les sorties d'air (131) sont circulaires et ont une taille de diamètre de 18 à 22mm, et trois sorties d'air (131) sont faits pour former un ensemble, dans lequel une sortie est disposée directement sous le tube d'aération annulaire (130) et chacune des autres sorties est disposée à chacune des deux positions à un angle de 45° des deux côtés de la sortie disposée directement sous le tube d'aération annulaire (130) et dans lequel les ensembles sont disposés sur le tube d'aération annulaire (130) à des intervalles égaux.

2. Le procédé d'enlèvement d'un métal lourd selon la revendication 1, dans lequel dans un étape de neutralisation finale dans une usine d'hydrométallurgie pour un minerai d'oxyde de nickel, un traitement de neutralisation est réalisée par le réservoir de neutralisation, et le métal lourd est enlevé sous forme d'un hydroxyde.
